# EUROPEAN PATENT APPLICATION

(11) **EP 4 231 689 A1**
(43) Date of publication of application: **23.08.2023**
(21) Application number: 20957694.1
(22) Date of filing: 15.10.2020
(51) Int. Cl.: H04W 16/28, H04W 76/19, H04W 28/04

(54) **TERMINAL, WIRELESS COMMUNICATION METHOD AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2020/038970
(87) International publication number: WO 2022/079865

(57) **Abstract**

A terminal according to an aspect of the present disclosure includes a transmitting section that transmits a random access preamble in a certain cell when a beam failure is detected, and a control section that controls beam update, when a MAC CE for beam failure recovery is transmitted in message 3 or message A of a contention type random access procedure corresponding to the random access preamble, after a specific period from a last symbol of first physical downlink control channel reception including a downlink control information format that has a same HARQ-ACK process number as HARQ-ACK for physical uplink shared channel transmission including the MAC CE for beam failure recovery, has a toggled NDI field value, and schedules transmission of a physical uplink shared channel. According to an aspect of the present disclosure, it is possible to appropriately update a beam in relation to BFR.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In the NR, it has been studied to perform procedure for a user terminal (user terminal or user equipment (UE)) to detect a beam failure (BF) and switch to another beam (which may also be referred to as beam failure recovery (BFR) procedure, BFR, and the like).

However, in current Rel. 16 NR specification, there may be a case where a failed beam is continuously used after completion of the BFR. In this case, appropriate communication cannot be performed, so that throughput may decrease or communication quality may degrade.

Therefore, an object of the present disclosure is to provide a terminal, a radio communication method, and a base station that can appropriately update a beam in relation to BFR.

### Solution to Problem

A terminal according to an aspect of the present disclosure includes a transmitting section that transmits a random access preamble in a certain cell when a beam failure is detected, and a control section that controls beam update, when a medium access control control element (MAC CE) for beam failure recovery is transmitted in message 3 or message A of a contention type random access procedure corresponding to the random access preamble, after a specific period from a last symbol of first physical downlink control channel reception including a downlink control information format that has a same HARQ-ACK process number as hybrid automatic repeat request acknowledgement (HARQ-ACK) for physical uplink shared channel transmission including the MAC CE for beam failure recovery, has a toggled new data indicator (NDI) field value, and schedules transmission of a physical uplink shared channel.

### Advantageous Effects of Invention

According to an aspect of the present disclosure, it is possible to appropriately update a beam in relation to BFR.

### Brief Description of Drawings

[FIG. 1] Fig. 1 is a view illustrating an example of beam recovery procedure in Rel. 15 NR.
[FIG. 2] Fig. 2 is a view illustrating flow of 4-step RACH.
[FIG. 3] Fig. 3 is a view illustrating flow of 2-step RACH.
[FIG. 4] Fig. 4 is a view illustrating an example of update of
a spatial relation for a PUCCH after CBRA BFR in Aspects 1-1, 2-1, and 3-1.
[FIG. 5] Fig. 5 is a view illustrating an example of update of a quasi-co-location (QCL) assumption for a PDCCH after CBRA BFR in Aspects 1-2, 2-2, and 3-2.
[FIG. 6] Fig. 6 is a diagram illustrating an example of a schematic configuration of a radio communication system according to one embodiment.
[FIG. 7] Fig. 7 is a diagram illustrating an example of a configuration of a base station according to one embodiment.
[FIG. 8] Fig. 8 is a diagram illustrating an example of a configuration of a user terminal according to one embodiment.
[FIG. 9] Fig. 9 is a diagram illustrating an example of a hardware configuration of the base station and the user terminal according to one embodiment.

### Description of Embodiments

### (Beam Failure Recovery)

In NR, communication using beam forming has been studied. For example, UE and a base station (for example, gNodeB (gNB)) may use a beam to be used for signal transmission (which is also referred to as a transmission beam, a Tx beam, or the like) or a beam to be used for signal reception (which is also referred to as a reception beam, an Rx beam, or the like).

In a case where beam forming is used, degradation of radio link quality is assumed because it becomes susceptible to interference by an obstacle. A radio link failure (RLF) may frequently occur due to degradation of the radio link quality. If the RLF occurs, cell reconnection is required, and thus, frequent occurrence of the RLF leads to degradation of system throughput.

In the NR, to reduce occurrence of the RLF, it has been studied to perform procedure of switching to another beam (which may also be referred to as beam recovery (BR), beam failure recovery (BFR), Layer 1/Layer 2 (L1/L2) beam recovery, or the like) in a case where quality of a specific beam degrades. The BFR procedure may be simply referred to as BFR.

Note that a beam failure (BF) in the present disclosure may be referred to as a link failure, a radio link failure (RLF).

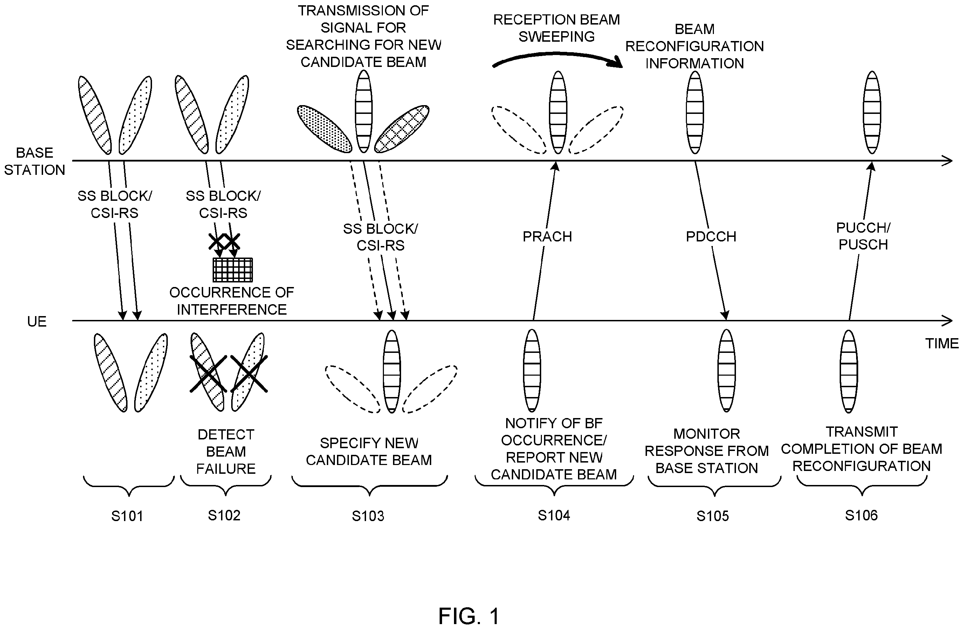

Fig. 1 is a view illustrating an example of beam recovery procedure in Rel. 15 NR. The number of beams, or the like, is an example, and is not limited thereto. In an initial state (step S101) in Fig. 1, the UE performs measurement on the basis of a reference signal (RS) resource transmitted using two beams.

The RS may be at least one of a synchronization signal block (SSB) or a channel state information RS (CSI-RS). Note that the SSB may also be referred to as an SS/physical broadcast channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, or the like, or a signal constituted by extending or changing these. The RS measured in step S101 may be referred to as an RS for beam failure detection (beam failure detection RS (BFD-RS)), or the like.

In step S102, interference in radio waves from the base station occurs, whereby the UE cannot detect the BFD-RS (or reception quality of the RS degrades). Such interference may occur due to, for example, an effect of an obstacle between the UE and the base station, fading, interference, or the like.

After a predetermined condition is satisfied, the UE detects a beam failure. For example, the UE may detect occurrence of a beam failure in a case where a block error rate (BLER) is less than a threshold value for all of the configured BFD-RS (BFD-RS resource configurations). If occurrence of a beam failure is detected, a lower layer (physical (PHY) layer) of the UE may notify (instruct) a higher layer (MAC layer) of a beam failure instance.

Note that a criterion for determination is not limited to the BLER and may be reference signal received power in a physical layer (Layer 1 reference signal received power (L1-RSRP)). Further, instead of RS measurement or in addition to RS measurement, beam failure detection may be performed on the basis of a downlink control channel (physical downlink control channel (PDCCH)), or the like. The BFD-RS may be expected to be in a quasi-co-location (QCL) with a DMRS of the PDCCH to be monitored by the UE.

Here, the QCL is an indicator indicating statistical property of a channel. For example, in a case where one signal/channel and another signal/channel have a QCL relation, this may mean that it is possible to assume that between these plurality of different signals/channels, at least one of a Doppler shift, a Doppler spread, an average delay, a delay spread, or a spatial parameter (for example, spatial Rx filter/parameter, spatial Tx (transmission) filter/parameter) is the same (a QCL relation is established regarding at least one of these).

Note that, the spatial Rx parameter may correspond to a reception beam of the UE (for example, a reception analog beam), and the beam may be specified on the basis of spatial QCL. The QCL (or at least one element of the QCL) in the present disclosure may be read as the spatial QCL (sQCL).

Information regarding the BFD-RS (for example, an RS index, resource, number, number of ports, precoding, or the like), information regarding beam failure detection (BFD) (for example, the above-described threshold value), or the like, may be configured in (notified to) the UE by using higher layer signaling, or the like. The information regarding the BFD-RS may also be referred to as information regarding a resource for BFR, or the like.

In the present disclosure, the higher layer signaling may be any of, for example, radio resource control (RRC) signaling, medium access control (MAC) signaling, broadcast information, or the like, or a combination thereof.

For example, a MAC control element (CE), a MAC protocol data unit (PDU), or the like, may be used for the MAC signaling. The broadcast information may be, for example, a master information block (MIB), a system information block (SIB), remaining minimum system information (RMSI), other system information (OSI), and the like.

The MAC layer of the UE may start a predetermined timer (which may also be referred to as a beam failure detection timer) in a case where a beam failure instance notification is received from the PHY layer of the UE. The MAC layer of the UE may trigger BFR (for example, start any one of random access procedure to be described later) after receiving the beam failure instance notification a certain number of times (for example, beamFailureInstanceMaxCount configured by RRC) or more before the timer expires.

The base station may determine that the UE has detected a beam failure in a case where there is no notification from the UE (for example, a period during which there is no notification exceeds a predetermined period) or in a case where a predetermined signal (beam recovery request in step S104) is received from the UE.

In step S103, for beam recovery, the UE starts search for a new candidate beam to be newly used for communication. The UE may measure a predetermined RS to select a new candidate beam corresponding to the RS. The RS measured in step S103 may be referred to as a new candidate beam identification RS (NCBI-RS), a CBI-RS, a candidate beam RS (CB-RS), or the like. The NCBI-RS may be the same as or different from the BFD-RS. Note that the new candidate beam may be referred to as a new candidate beam, a candidate beam, or a new beam.

The UE may determine a beam corresponding to an RS that satisfies a predetermined condition as a new candidate beam. The UE may determine a new candidate beam based on, for example, an RS whose L1-RSRP exceeds a threshold value among configured NCBI-RSs. Note that a criterion for determination is not limited to L1-RSRP. The determination may be made using at least any one of L1-RSRP, L1-RSRQ, or L1-SINR (signal to noise interference power ratio). L1-RSRP regarding an SSB may also be referred to as SS-RSRP. L1-RSRP regarding a CSI-RS may also be referred to as CSI-RSRP. Similarly, L1-RSRQ regarding an SSB may also be referred to as SS-RSRQ. L1-RSRQ regarding a CSI-RS may also be referred to as CSI-RSRQ. Further, similarly, L1-SINR regarding an SSB may be referred to as SS-SINR. L1-SINR regarding a CSI-RS may be referred to as CSI-SINR.

Information regarding an NCBI-RS (for example, an RS resource, number, number of ports, precoding, or the like), information regarding new candidate beam identification (NCBI) (for example, the above-described threshold value), or the like, may be configured in (notified to) the UE using higher layer signaling, or the like. The information regarding the NCBI-RS may be acquired on the basis of the information regarding the BFD-RS. The information regarding the NCBI-RS may also be referred to as information regarding an NCBI resource, or the like.

Note that the BFD-RS, NCBI-RS, or the like, may be read as a radio link monitoring reference signal (RLM-RS).

In step S104, the UE that has specified the new candidate beam transmits a beam failure recovery request (BFRQ). The beam recovery request may also be referred to as a beam recovery request signal, a beam failure recovery request signal, or the like.

The BFRQ may be transmitted using, for example, a physical random access channel (PRACH). The BFRQ may include information on the new candidate beam specified in step S103. A resource for the BFRQ may be associated with the new candidate beam. Notification of the information on the beam may be performed using, for example, a beam index (BI), a port index of a predetermined reference signal, a resource index (for example, CSI-RS resource indicator (CRI), SSB resource indicator (SSBRI)), or the like.

In Rel. 15 NR, contention based BFR (CB-BFR) which is BFR based on contention based random access (CBRA) procedure and contention-free BFR (CF-BFR) which is BFR based on contention-free random access (CFRA) procedure are supported. In the CB-BFR or the CF-BFR, the UE may transmit a preamble (which is also referred to as an RA preamble, a physical random access channel (PRACH), a RACH preamble, or the like) as the BFRQ by using a PRACH resource.

Note that the CF-BFR may also be referred to as CFRA BFR. The CB-BFR may also be referred to as CBRA BFR. The CFRA procedure and the CFRA may be read as each other. The CBRA procedure and the CBRA may be read as each other.

In step S105, the base station that has detected the BFRQ transmits a response signal (which may also be referred to as a "BFR response", "gNB response", or the like) for the BFRQ from the UE. The response signal may include reconfiguration information (for example, DL-RS resource configuration information) for one or more beams.

The response signal may be transmitted, for example, in a UE common search space of the PDCCH. The notification of the response signal may be performed by using a PDCCH (DCI) having a cyclic redundancy check (CRC) scrambled by an identifier (for example, a cell radio network temporary identifier (C-RNTI)) of the UE. The UE may determine at least one of a transmission beam or a reception beam to be used, on the basis of beam reconfiguration information.

The UE may monitor the response signal on the basis of at least one of a control resource set (CORESET) for BFR or a search space set for BFR. For example, the UE may detect the DCI with the CRC scrambled with the C-RNTI in the BFR search space in a CORESET that is individually configured.

For the CB-BFR, it may be determined that contention resolution is successful in a case where the UE receives a PDCCH corresponding to the C-RNTI regarding the UE itself.

Regarding the processing in step S105, a period may be set for the UE to monitor a response from the base station (for example, gNB) for the BFRQ. The period may also be referred to as, for example, a gNB response window, a gNB window, a beam recovery request response window, a BFRQ response window, or the like. The UE may retransmit the BFRQ in a case where no gNB response is detected within the window period.

In step S106, the UE may transmit a message indicating that beam reconfiguration is completed to the base station. The message may be transmitted by the PUCCH or PUSCH, for example.

In step S106, the UE may receive RRC signaling indicating a configuration of a transmission configuration indication state (TCI state) to be used for the PDCCH or may receive a MAC CE indicating activation of the configuration.

Beam recovery success (BR success) may represent a case where the processing reaches step S106, for example. On the other hand, beam recovery failure (BR failure) may correspond to, for example, a case where the number of times of BFRQ transmission has reached a predetermined number, or a beam-failure-recovery-timer has expired.

Note that numbers of these steps are merely numbers for description, and a plurality of these steps may be combined, or the order of these steps may be changed. Further, whether or not to perform BFR may be configured in the UE by using higher layer signaling.

### (CBRA)

In the NR, as the contention based random access (CBRA) also used in the CB-BFR, there are 4-step CBRA procedure defined in Rel. 15 and 2-step CBRA procedure defined in Rel. 16. The former may be referred to as 4-step RACH, and the latter may be referred to as 2-step RACH.

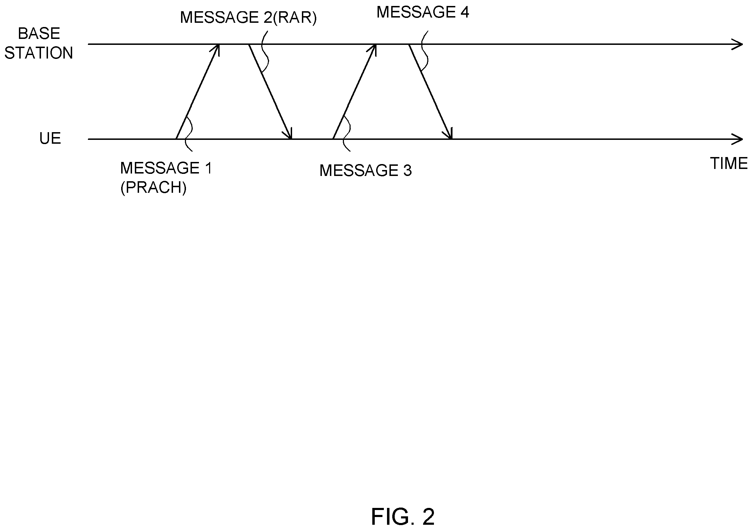

Fig. 2 is a view illustrating an example of the 4-step RACH. In the 4-step RACH, the UE first transmits a message 1 (random access preamble). The base station returns a message 2 including a response (random access response (RAR)) in response to the message 1 to the UE.

Note that a DCI format for scheduling the RAR has a CRC scrambled by a random access RNTI (RA-RNTI).

The UE transmits a UE identifier (ID) for contention resolution by using a message 3 on the basis of a UL grant indicated by the RAR. The UE ID may be, for example, short (or SAE)-temporary mobile subscriber identity (S-TMSI).

In a case where the UE is in an idle state (RRC_IDLE state) (in a case where the UE is an idle UE), the message 3 includes a common control channel service data unit (CCCH SDU). The CCCH is a logical channel to be used in a case where there is no RRC connection. The CCCH SDU may transmit an RRC message (for example, an RRC connection request) including the UE ID.

In a case where the UE is a connected UE (UE in an RRC_CONNECTED state), the message 3 may include (a MAC CE for making notification of) the C-RNTI.

If the UE ID to be notified using the message 3 does not collide with another UE, the base station returns a message 4 including a contention resolution ID to the UE.

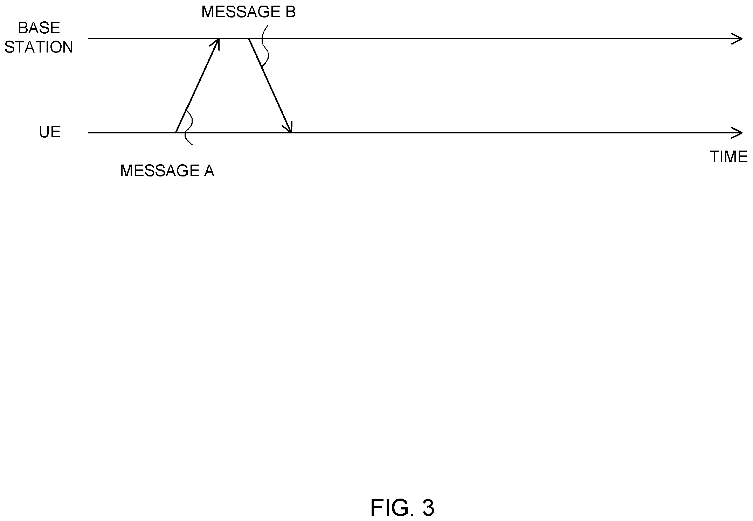

Fig. 3 is a view illustrating an example of the 2-step RACH. In the 2-step RACH, the UE first transmits a message A. The message A includes a preamble that is subjected to time division multiplexing (TDM) and a PUSCH and corresponds to the messages 1 + 3 of the 4-step RACH. The UE ID may be transmitted on the PUSCH.

After receiving the message A, the base station returns a message B to the terminal. The message B includes a PDSCH (and a PDCCH for scheduling the PDSCH) and corresponds to the messages 2 + 4 of the 4-step RACH. The notification of the content of the RAR and the contention resolution ID may be made by using the message B.

Note that a DCI format for scheduling the message 4 or the message B for the UE may have a CRC scrambled by a temporary C-RNTI (TC-RNTI) in a case where the UE is an idle UE and may have a CRC scrambled by a C-RNTI in a case where the UE is a connected UE.

In a case where the idle UE that has received the message 4 or the message B succeeds in decoding the received message, and the contention resolution ID in the message matches that of the CCCH SDU transmitted in the message 3 or the message A, it may be regarded that the CBRA is successful (the contention has been resolved). In addition, the UE may transmit hybrid automatic repeat request acknowledgement (HARQ-ACK) for the received message. The base station that has received the HARQ-ACK may set a value of the TC-RNTI as the C-RNTI of the UE.

In a case where the DCI (PDCCH) that has scheduled the received message indicates the C-RNTI and contains a UL grant for new transmission, it may be regarded that the CBRA is successful (contention has been resolved) for the connected UE that has received the message 4 or the message B.

Note that, in the flow of BFR in Fig. 1, BFRQ transmission in step S104 corresponds to transmission of the message 1 or the message A in a case of the CBRA BFR. Further, BFR response reception in step S105 corresponds to reception of the message 4 or the message B (and reception of the DCI that schedules them) in a case of the CBRA BFR.

### (QCL Assumption of PDCCH after BFR and PUCCH Spatial Relation)

In the Rel.16 NR specification (TS 38.213 V16.0.0 § 6 Link recovery procedures) which has been studied so far, update of QCL (beam) for a PDCCH after BFR is described as follows.
· For PDCCH monitoring in a search space set provided by recoverySearchSpaceId and for corresponding PDSCH reception, the UE assumes the same antenna port quasi-collocation parameters as the ones associated with index q_{new} until the UE receives by higher layers an activation for a TCI state or any of the parameters tci-StatesPDCCH-ToAddList and/or tci-StatesPDCCH-ToReleaseList.
· For the PCell or the PSCell, after 28 symbols from a last symbol of a first PDCCH reception in a search space set provided by recoverySearchSpaceId where a UE detects a DCI format with CRC scrambled by C-RNTI or MCS-C-RNTI, the UE assumes same antenna port quasi-collocation parameters as the ones associated with index q_{new} for PDCCH monitoring in a CORESET with index 0.

In addition, in the Rel. 16 NR specification described above, update of a spatial relation (beam) for a PUCCH after BFR is described as follows:
- For the PCell or the PSCell, after 28 symbols from a last symbol of a first PDCCH reception in a search space set provided by recoverySearchSpace ID for which the UE detects a DCI format with CRC scrambled by C-RNTI or MCS-C-RNTI and until the UE receives an activation command for PUCCH-SpatialRelationInfo or is provided PUCCH-SpatialRelationInfo for PUCCH resource(s), the UE transmits a PUCCH on a same cell as the PRACH transmission using transmission conditions.
- A same spatial filter as for the last PRACH transmission is used.
- The transmission power is determined by using qᵤ=0, q_{d}=q_{new}, l = 0 in a formula (Subclause 7.2.1 of TS 38.213) used to determine the PUCCH transmission power (a power determined as described in Clause 7.2.1 with qᵤ=0, q_{d}=q_{new}, l=0).

Note that q_{new} may be an index of a new candidate beam (for example, an SSB/CSI-RS) selected by the UE in the BFR procedure and reported on a corresponding PRACH to a network (or an index of a new beam found in the BFR procedure).

In a normal case, qᵤ may be a PUCCH P0 ID (p0-PUCCH-Id) indicating P0 for a PUCCH (P0-PUCCH) in a PUCCH P0 set (p0-Set). l may be referred to as an index of a power control adjustment state, an index of a PUCCH power control adjustment state, a closed loop index, or the like. q_{d} may be an index (for example, configured by PUCCH-PathlossReferenceRS) of a path-loss reference RS.

With the definition as described above, for a PDCCH/PUCCH, it is possible to avoid performing transmission/reception processing on the basis of an unclear beam after completion of the RA procedure for BFR until an explicit beam is configured/activated, so that it is possible to prevent degradation in communication quality.

However, the above definition assumes the CFRA BFR. For this reason, after completion of the CBRA BFR, the beam of the PDCCH/PUCCH is not updated, a failed beam is continuously used, as a result of which appropriate communication cannot be performed, and thus, throughput may decrease or communication quality may degrade. For example, as described below, a problem may occur when the base station fails to receive the message 3.

### <Successful/Failed Contention Resolution >

If the UE receives the DCI with the CRC scrambled with the C-RNTI, which is a QCL relationship with the SSB (SS/PBCH block) of the PRACH occasion, the UE determines that the contention resolution of the CBRA BFR is successful. For example, if the MAC layer of the UE receives a notification of reception of a PDCCH transmission of a special cell (SpCell) from the lower layer, the C-RNTI MAC CE is included in message 3 (RA of the connected UE), a random access procedure is initiated for SpCell beam failure recovery and the PDCCH transmission corresponds to the C-RNTI, the UE may determine that contention resolution of the CBRA BFR is successful. Note that the "when the PDCCH transmission corresponds to a C-RNTI and includes a UL grant for a new transmission" may be read as "when the PDCCH transmission corresponds to the C-RNTI". This replacement may be performed according to the configuration of the higher layer parameter (for example, the RRC parameter). The new transmission may be a PUSCH transmission. The PDCCH transmission including the UL grant for the new transmission may mean that the DCI in the PDCCH schedules the new UL data (PUSCH).

In addition, when detecting the DCI format corresponding to the PUSCH transmission scheduled by the RAR UL grant, the UE may assume the same DM-RS antenna port QCL property as that for the SS/PBCH block used for the PRACH occasion for the PDCCH carrying the DCI format. This processing may be performed regardless of whether the UE is provided with a TCI state of a CORESET receiving a PDCCH with its DCI format.

On the other hand, when the base station fails to receive the message 3, retransmission of the message 3 is scheduled by the DCI scrambled by the TC-RNTI. This scheduling is similarly performed both when the UE is an idle UE and when the UE is a connected UE. This is because the base station does not know whether the UE is idle UE or connected UE before the contention resolution.

For example, retransmission of the message 3 PUSCH is transmitted in a transport block scheduled by the DCI format 0_0. Its DCI format 0_0 has a CRC scrambled by the TC-RNTI provided in the RAR message corresponding to message 3. When detecting the DCI format, the UE may assume the same DM-RS antenna port QCL property as that for the SS/PBCH block used for the PRACH occasion for the PDCCH carrying the DCI format. This processing may be performed regardless of whether the UE is provided with a TCI state of a CORESET receiving a PDCCH with its DCI format.

However, when the base station cannot correctly receive the message 3 (fails), the base station cannot notice the issuance of the BFR from the UE. This is because the base station does not know which UE is transmitting and receiving the CBRA before contention resolution in the CBRA. If the base station fails to correctly receive the message 3, the base station may send usual DCI (DCI in which CRC is scrambled by the C-RNTI but the completion of the CBRA BFR is not intended (DCI not intended as a trigger for the completion of the CBRA BFR)). In that case, the UE may determine that the CBRA-BFR is completed.

Note that the DCI that triggers the completion of the CBRA BFR is the SSB and QCL DCI used for associating the random access preamble (PRACH) of the CBRA BFR, but the TCI state (QCL) of the usual DCI transmitted by the base station that has not correctly received the message 3 is the TCI state configured before the occurrence of the BFR. However, there is a possibility that the UE may read this usual DCI.

In this case, the UE determines that the CBRA-BFR is completed and updates the PUCCH/PDCCH beam, but the base station is not aware of the occurrence of the CBRA, and therefore does not update the PUCCH/PDCCH beam. Therefore, appropriate communication cannot be performed, so that throughput may decrease or communication quality may degrade.

The present inventors therefore have conceived of a method for appropriately updating a beam in relation to BFR.

Hereinafter, embodiments according to the present disclosure will be described in detail with reference to the drawings. The radio communication method according to each of the embodiments may be applied independently, or may be applied in combination with others.

In the present disclosure, "A/B" and "at least one of A or B" may be interchangeable.

In the present disclosure, the index, the ID, the indicator, the resource ID, and the like may be read as one another.

The message 3 and the message 3 PUSCH may be replaced with each other. The spatial filter and the spatial domain filter may be replaced with each other.

Furthermore, in the present disclosure, the "until the UE receives an activation command or configuration to update spatial domain filter for PUCCH resource(s))" and the "until the UE receives an activation command for PUCCH-SpatialRelationInfo or is provided PUCCH-SpatialRelationInfo for PUCCH resource(s))" may be replaced with each other.

### (Radio Communication Method)

The following processing of each embodiment is processing in a case where the UE transmits the random access preamble in a certain cell (PCell or PSCell) when detecting the beam failure. A contention type random access (CBRA) procedure to be described later corresponds to the random access preamble. Note that the use of the transmission conditions in Aspects 1-1, 2-1, and 3-1 and the QCL assumption update processing in Aspects 1-2, 2-2, and 3-2 correspond to control regarding beam update. The beam updated in Aspects 1-1, 2-1, and 3-1 is a PUCCH transmission beam, and the beam updated in Aspects 1-2, 2-2, and 3-2 is a PDCCH reception beam.

### <First Embodiment>

### [Aspect 1-1]

In Aspect 1-1, the processing of updating the transmission condition of the PUCCH after the CBRA BFR may be performed as follows:
· For the PCell or the PSCell, if BFR MAC CE is transmitted in the message 3 or the message A of CBRA procedure, after X symbols from a last symbol of a first PDCCH reception with a DCI format scheduling a PUSCH transmission with a same HARQ process number as for the transmission of the first PUSCH and having a toggled new data indicator (NDI) field value and until the UE receives an activation command or configuration to update spatial domain filter for PUCCH resource(s), the UE transmits a PUCCH on a same cell as the PRACH transmission using the following transmission conditions (For the PCell or the PSCell, if BFR MAC CE is transmitted in Msg3 or MsgA of contention based random access procedure, after X symbols from a last symbol of a first PDCCH reception with a DCI format scheduling a PUSCH transmission with a same HARQ process number as for the transmission of the first PUSCH and having a toggled NDI field value and until the UE receives an activation command or configuration to update spatial domain filter for PUCCH resource(s), the UE transmits a PUCCH on a same cell as the PRACH transmission using the following transmission conditions.):

### (Transmission Conditions)

· A same spatial filter as for the last PRACH transmission is used.
· The transmission power is determined by using qᵤ = 0, q_{d} = q_{newCBRA} (or q_{new}), l = 0, and the like in a formula (Subclause 7.2.1 of TS 38.213) used to determine the PUCCH transmission power (a power determined as described in Clause 7.2.1 with qᵤ = 0, q_{d} = q_{newCBRA} (or q_{new)}, l = 0, and ...).

Note that q_{newCBRA} (or q_{new}) may be an index (or an index of a new beam found in the BFR procedure) of a new candidate beam (for example, an SSB/CSI-RS) selected by the UE in the CBRA BFR procedure and reported to the network on a corresponding PRACH. In other words, q_{newCBRA} (or q_{new}) may correspond to an SS/PBCH block index selected for the last PRACH transmission or may correspond to an SS/PBCH block index provided by the BFR MAC CE or may correspond to an SS/PBCH block index provided in a higher layer (for example, MAC layer).

The "X symbol" (specific period) may be read as "Yms". X (for example, X = 28) or Y (for example, Y = 3) may be determined in advance by the specifications, may be set by the higher layer signaling, or the like, or may be determined on the basis of the UE capability (for example, the UE capability related to the BFR).

In the present disclosure, the "first PUSCH transmission" may be replaced with the "PUSCH transmission including (transmitting) the BFR MAC CE" or the "first PUSCH transmission including BFR MAC CE in message 3 or message A of CBRA procedure". The "same HARQ process number as that for the first PUSCH transmission" may mean the "same HARQ process number as that for the first PUSCH transmission".

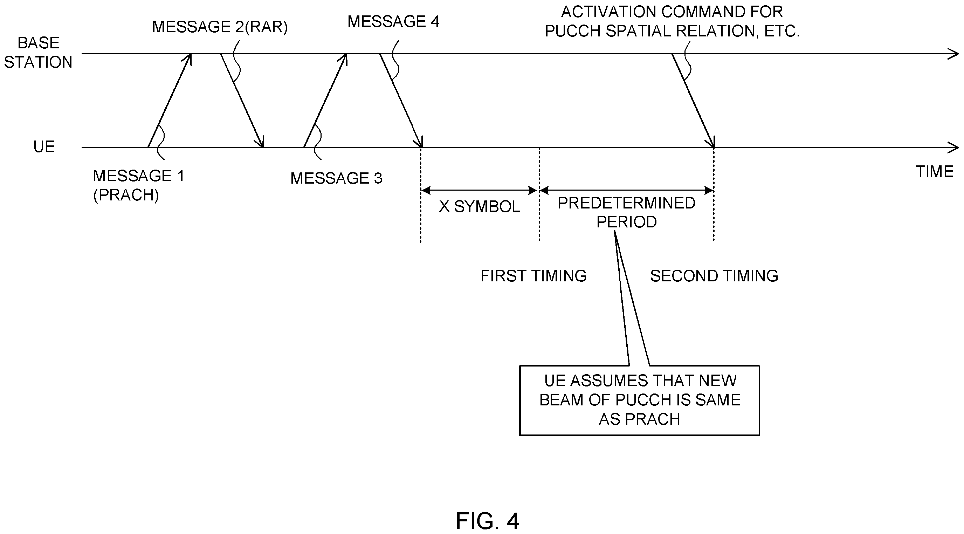

Fig. 4 is a view illustrating an example of update of a spatial relation for a PUCCH after the CBRA BFR in Aspect 1-1. In this example, the UE assumes that a new beam of a PUCCH is the same as (a new beam of) a PRACH (the above-described transmission conditions are used for transmission of the PUCCH) from a first timing to a second timing after completion of the CBRA BFR.

The first timing in Fig. 4 may be after X symbols from a last symbol of a first PDCCH reception with a DCI format scheduling a PUSCH transmission with a same HARQ process number as for the transmission of the first PUSCH and having a toggled NDI field value.

The second timing in Fig. 4 may be a timing at which the UE receives an activation command or configuration to update spatial domain filter for PUCCH resource(s) for a cell in which the CBRA BFR has been performed.

### [Aspect 1-2]

In Aspect 1-2, updating of the QCL assumption for the PDCCH after the BFR may be performed as follows:
· For the PCell or the PSCell, if BFR MAC CE is transmitted in the message 3 or the message A of CBRA procedure, after X symbols from a last symbol of a first PDCCH reception with a DCI format scheduling a PUSCH transmission with a same HARQ process number as for the transmission of the first PUSCH and having a toggled NDI field value (For the PCell or the PSCell, if BFR MAC CE is transmitted in Msg3 or MsgA of contention based random access procedure, after X symbols from a last symbol of a first PDCCH reception with a DCI format scheduling a PUSCH transmission with a same HARQ process number as for the transmission of the first PUSCH and having a toggled NDI field value), the following QCL assumption update processing may be performed.

### (QCL Assumption Update Processing)

The UE monitors the PDCCH in all the CORESETs on the same cell as the PRACH transmission, using the quasi-collocation parameter of the same antenna port as that associated with the index q_{new}. The index q_{new} is the SS/PBCH block index selected for the last PRACH transmission. (the UE monitors PDCCH in all CORESETs on the same cell as the PRACH transmission using the same antenna port quasi-collocation parameters as the ones associate with index q_{new}, where q_{new} is the SS/PBCH block index selected for the last PRACH transmission.)

The above "all CORESETs" may be read at least one of an arbitrary CORESETs, some CORESET, all CORESETs except a CORESET related to a search space for a random access procedure (the search space ID is set by a higher layer parameter "ra-SearchSpace") (all CORESETs, except CORESET associated with ra-SearchSpace), a specific CORESET, a CORESET other than CORESET#0, or CORESET#0. Here, the "arbitrary CORESET" and the "all CORESETs" may include CORESET #0 or may be CORESETs other than CORESET #0. Note that CORESET#0 may be a CORESET configured by a higher layer parameter controlResourceSetZero, or may mean a CORESET with an index of 0.

X described above may be the same as or different from X in Aspect 1-1. The index q_{new} may be the same as q_{newCBRA} (or q_{new}) described in Aspect 1-1.

In a case where the BFR MAC CE is transmitted in the message 3 or the message A of the CBRA, the UE may update the QCL assumption of the PDCCH after completion of the CBRA. In this case, the base station can identify whether the message 3 or the message A is for CBRA BFR or for other CBRAs on the basis of whether or not the messages include the BFR MAC CE. Thereby, both the base station and the UE can control PDCCH transmission/reception after recognizing completion of the CBRA BFR.

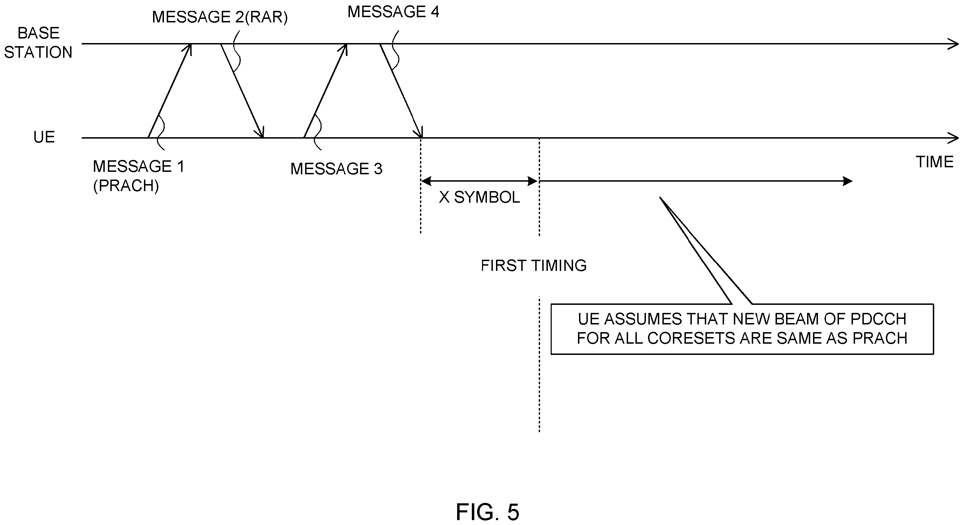

Fig. 5 is a view illustrating an example of update of the QCL assumption for a PDCCH after the CBRA BFR in Aspect 1-2. In this example, the UE assumes that a new beam of a PDCCH for all CORESETs are the same as (a new beam of) a PRACH (the QCL assumption of q_{new} described above is applied to the PDCCH) after the first timing transition after completion of the CBRA BFR.

The first timing in Fig. 5 may be after X symbols from the PDCCH reception with a DCI format scheduling a PUSCH transmission with a same HARQ process number as for the transmission of the first PUSCH and having a toggled NDI field value.

According to the first embodiment described above, the UE can appropriately use a beam recovered by the CBRA BFR for subsequent transmission of the PUCCH/reception of the PDCCH.

### <Second Embodiment>

### [Aspect 2-1]

Aspect 2-1 is similar to Aspect 1-1 of the first embodiment, and description of parts similar to Aspect 1-1 is omitted.

In Aspect 2-1, the processing of updating the transmission condition of the PUCCH after the CBRA BFR may be performed as follows:
· For the PCell or the PSCell, if BFR MAC CE is transmitted in the message 3 or the message A of CBRA procedure, after X symbols from a last symbol of a first PDCCH reception with a DCI format scheduling a PUSCH transmission with a same HARQ process number as for the transmission of the first PUSCH and having a toggled NDI field value, the first PDCCH reception being received after PDCCH reception where the UE detects a DCI format with CRC scrambled by C-RNTI, and until the UE receives an activation command or configuration to update spatial domain filter for PUCCH resource(s), the UE transmits a PUCCH on a same cell as the PRACH transmission using the transmission conditions indicated in Aspect 1-1.

### [Aspect 2-2]

Aspect 2-2 is similar to Aspect 1-2 of the first embodiment, and description of parts similar to Aspect 1-2 is omitted.

In Aspect 2-2, updating of the QCL assumption for the PDCCH after the BFR may be performed as follows:
· For the PCell or the PSCell, if BFR MAC CE is transmitted in the message 3 or the message A of CBRA procedure, after X symbols from a last symbol of a first PDCCH reception with a DCI format scheduling a PUSCH transmission with a same HARQ process number as for the transmission of the first PUSCH and having a toggled NDI field value, the first PDCCH reception being received after PDCCH reception where the UE detects a DCI format with CRC scrambled by C-RNTI, the UE may perform the QCL assumption update processing indicated in Aspect 1-2.

That is, the "first PDCCH" in Aspects 1-1 and 1-2 may be "first PDCCH which is received after PDCCH reception where the UE detects a DCI format with CRC scrambled by C-RNTI" in Aspects 2-1 and 2-2.

In Aspects 2-1 and 2-2 described above, "with a DCI format scheduling a PUSCH transmission with a same HARQ process number as for the transmission of the first PUSCH and having a toggled NDI field value" (the first condition) and "received after PDCCH reception where the UE detects a DCI format with CRC scrambled by C-RNTI" (the second condition), which are conditions of the "first PDCCH", need to be simultaneously satisfied (by one PDCCH). However, in a case where the first condition and the second condition are satisfied at different timings (by different PDCCHs), similar processing (use of transmission condition or QCL update processing) may be performed. In this case, any of the reception of the PDCCH satisfying the first condition and the reception of the PDCCH satisfying the second condition may come first, and the UE may perform the use of the transmission condition or the QCL update processing after X symbols from a last symbol of the PDCCH reception received later.

That is, the "first PDCCH reception with a DCI format scheduling a PUSCH transmission with a same HARQ process number as for the transmission of the first PUSCH and having a toggled NDI field value, the first PDCCH reception being received after PDCCH reception where the UE detects a DCI format with CRC scrambled by C-RNTI" in Aspects 2-1 and 2-2 may be replaced with "(the later one of) reception of both of a first PDCCH with a DCI format scheduling a PUSCH transmission with a same HARQ process number as for the transmission of the first PUSCH and having a toggled NDI field value, and a first PDCCH received after PDCCH reception where the UE detects a DCI format with CRC scrambled by C-RNTI".

According to the second embodiment, since the beam is updated (updating the transmission condition, updating the QCL assumption) after the contention resolution of the CBRA BFR is successful, the beam can be appropriately updated.

### <Third Embodiment>

### [Aspect 3-1]

Aspect 3-1 is similar to Aspect 1-1 of the first embodiment, and description of parts similar to Aspect 1-1 is omitted.

In Aspect 3-1, the processing of updating the transmission condition of the PUCCH after the CBRA BFR may be performed as follows:
· For the PCell or the PSCell, if BFR MAC CE is transmitted in the message 3 or the message A of CBRA procedure, after X symbols from a last symbol of a first PDCCH reception with a DCI format scheduling a PUSCH transmission with a same HARQ process number as for the transmission of the first PUSCH and having a toggled NDI field value, and including CRC scrambled by C-RNTI, and until the UE receives an activation command or configuration to update spatial domain filter for PUCCH resource(s), the UE transmits a PUCCH on a same cell as the PRACH transmission using the transmission conditions indicated in Aspect 1-1.

### [Aspect 3-2]

Aspect 3-2 is similar to Aspect 1-2 of the first embodiment, and description of parts similar to Aspect 1-2 is omitted.

In Aspect 3-2, updating of the QCL assumption for the PDCCH after the BFR may be performed as follows:
· For the PCell or the PSCell, if BFR MAC CE is transmitted in the message 3 or the message A of CBRA procedure, after X symbols from a last symbol of a first PDCCH reception with a DCI format scheduling a PUSCH transmission with a same HARQ process number as for the transmission of the first PUSCH and having a toggled NDI field value, and including CRC scrambled by C-RNTI, the UE may perform the QCL assumption update processing indicated in Aspect 1-2.

That is, the "DCI format" in Aspects 1-1 and 1-2 may be "DCI format with CRC scrambled by C-RNTI" in Aspects 3-1 and 3-2.

In Aspects 3-1 and 3-2 described above, "scheduling a PUSCH transmission with a same HARQ process number as for the transmission of the first PUSCH and having a toggled NDI field value" (the first condition) and "with CRC scrambled by C-RNTI" (the second condition), which are conditions of the "DCI format", need to be simultaneously satisfied (by one DCI). However, in a case where the first condition and the second condition are satisfied at different timings (by different DCI), similar processing (use of transmission condition or QCL update processing) may be performed. In this case, any of the reception of the PDCCH with a DCI format satisfying the first condition and the reception of the PDCCH with a DCI format satisfying the second condition may come first, and the UE may perform the use of the transmission condition or the QCL update processing after X symbols from a last symbol of the PDCCH reception received later.

That is, in Aspects 3-1 and 3-2, the "first PDCCH reception with a DCI format scheduling a PUSCH transmission with a same HARQ process number as for the transmission of the first PUSCH and having a toggled NDI field value, and including CRC scrambled by C-RNTI" may be replaced with "(the later one of) reception of both of a first PDCCH with a DCI format scheduling a PUSCH transmission with a same HARQ process number as for the transmission of the first PUSCH and having a toggled NDI field value, and a first PDCCH with a DCI format with CRC scrambled by C-RNTI".

According to the third embodiment, since the CBRA BFR completion timing and the beam update (updating the transmission condition, updating the QCL assumption) timing can be matched, the beam can be appropriately updated.

### <Others>

The UE may update the beam of the PUCCH/PDCCH after the response receiving-only search space/CORESET of the CBRA BFR is configured in advance and the DCI is received in that search space/CORESET. As a result, it is possible to prevent the usual DCI from being erroneously recognized as the DCI indicating the completion of the CBRA BFR and updating the beam.

In addition, the UE may update the beam of the PUCCH/PDCCH after the response receiving-only RNTI of the CBRA BFR is specified and the DCI CRC-scrambled with the RNTI is received. As a result, it is possible to prevent the usual DCI from being erroneously recognized as the DCI indicating the completion of the CBRA BFR and updating the beam.

The UE may update the beam of the PUCCH/PDCCH in response to the reception of the DCI corresponding to the response receiving-only search space/CORESET/response receiving-only RNTI, or may update the beam of the PUCCH/PDCCH after X symbols from a last symbol of the DCI (X may be X described above).

The processing of each embodiment may be applied in a case where it is configured by higher layer signaling. For example, at least one of Aspects 1-1, 2-1, and 3-1 may be applied when the RRC parameter "enablePUCCHBeamResetBFR" is configured, and at least one of Aspects 1-2, 2-2, and 3-2 may be applied when the RRC parameter "enablePDCCHBeamResetBFR" is configured. Here, each of "enablePUCCHBeamResetBFR" and "enablePDCCHBeamResetBFR" may be a parameter indicating whether or not to apply (enable) the update operation of the beam (spatial relation/TCI state) of the PUCCH/PDCCH after the CBRA BFR as described in the present disclosure, and for example, it may be indicated that "apply (enable)" in a case where a value of "enabled" or "true" is configured.

The processing of each embodiment may be applied to when supporting is reported in the UE capability. Furthermore, in a case where at least one of "Pcell BFR" and "Scell BFR" is supported in the UE capability, the processing of each embodiment may be applied. The spatial domain filter/TCI state of the PUCCH/PDCCH in the present disclosure may be applied to all PUCCH/PDCCH resources of the PCell/PSCell.

### <Effects>

The "DCI format scheduling a PUSCH transmission with a same HARQ process number as for the transmission of the first PUSCH and having a toggled NDI field value" in each embodiment corresponds to a delivery acknowledgement (ACK) of the first PUSCH (PUSCH including BFR MAC CE). When the base station fails to receive the message 3 and schedules the PUSCH/PDSCH without noticing the CBRA-BFR, the base station further transmits an instruction to retransmit the PUSCH/PDSCH (the DCI in which the CRC is scrambled by the C-RNTI), and thus does not transmit the DCI corresponding to the ACK of the first PUSCH as described above. Therefore, the UE can prevent erroneously determining that the CBRA-BFR is completed and updating the PUCCH/PDCCH beam when the base station fails to receive the message 3.

Specifically, when the base station fails to receive the message 3 of CBRA, retransmission of the message 3 is scheduled by the DCI scrambled by the TC-RNTI. On the other hand, since the base station does not notice that the destination UE requests the BFR, there is a possibility that the base station schedules the PDSCH/PUSCH by using the DCI in which the CRC is scrambled by the C-RNTI. However, since the UE does not transmit the HARQ for the PDSCH or does not transmit the PUSCH, the base station schedules retransmission of the PDSCH/PUSCH with the DCI in which the CRC is scrambled by the C-RNTI.

In the scheduling of the retransmission, since the base station does not transmit the DCI corresponding to the ACK of the PUSCH, the QCL (beam) is not updated. Therefore, even if the base station fails to receive the message 3, it is possible to match the QCL (beam) update timing after the CBRA BFR between the base station and the UE.

Note that, in a case where the base station fails to receive the message 3 of the CBRA, in order to prevent the UE from transmitting the PUSCH by scheduling the PUSCH with the DCI in which the CRC is scrambled by the C-RNTI, the UE may perform control not to transmit (or even if it is scheduled, ignore) the PUSCH in which the CRC is scrambled by the C-RNTI until reception of the DCI corresponding to the ACK of the first PUSCH after transmission of the message 3 during the CBRA BFR procedure. As a result, since the PUSCH can be scheduled only for the message 3 or retransmission of the message 3 during a period from transmission of the message 3 to reception of the DCI corresponding to the ACK of the first PUSCH, the QCL update timing after the CBRA BFR can be matched between the base station and the UE with higher reliability.

Note that the "(PDCCH reception of) the DCI format with a same HARQ process number as for the transmission of first PUSCH and having a toggled NDI field value" in the present disclosure may be read as any channel/signal/information corresponding to the ACK of the first PUSCH.

In addition, "DCI having CRC scrambled by a C-RNTI" in the present disclosure may be simply replaced with DCI with (or accompanied by) CRC scrambled by C-RNTI. In addition, "DCI having CRC scrambled by a C-RNTI" in the present disclosure may be replaced with "DCI with C-RNTI to schedule new UL data".

In addition, "DCI having CRC scrambled by a C-RNTI" in the present disclosure may be read as "DCI with C-RNTI to schedule new UL data, if certain higher layer parameters (for example, parameters relating to BFR operation of Rel. 16/17) are configured, otherwise DCI with C-RNTI". In this case, for example, the UE can appropriately determine the DCI serving as a reference of the completion timing of the CBRA BFR.

### (Radio communication system)

Hereinafter, a configuration of a radio communication system according to one embodiment of the present disclosure will be described. In this radio communication system, communication is performed by using any one of or a combination of the radio communication methods according to the above-described embodiments of the present disclosure.

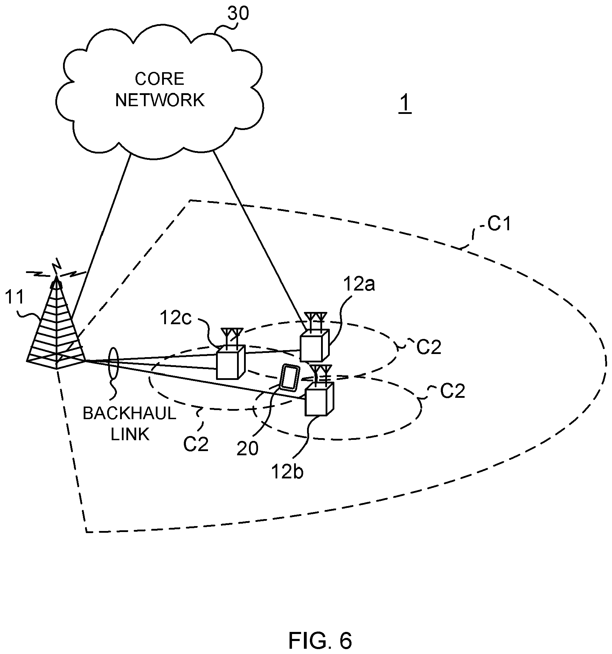

Fig. 6 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a Macro cell C1 with a relatively wide coverage, and base stations 12 (12a to 12c) disposed in the Macro cell C1, each of which forms a Small cell C2 narrower than the Macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as a "base station 10", unless these base stations are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first Frequency Range 1 (FR1) and/or a second Frequency Range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that frequency ranges, definitions, or the like of the FR1 and FR2 are not limited to these, and, for example, the FR1 may correspond to a higher frequency range than the FR2.

Further, the user terminal 20 may perform communication in each CC by using at least one of Time Division Duplex (TDD) and Frequency Division Duplex (FDD).

The plurality of base stations 10 may be connected in a wired (e.g., an optical fiber or an X2 interface in compliance with common public radio interface (CPRI)) or wireless manner (e.g., NR communication). For example, in a case where NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an Evolved Packet Core (EPC), a 5G Core Network (5GCN), or a Next Generation Core (NGC), or the like.

The user terminal 20 may be a terminal corresponding to at least one of communication methods such as LTE, LTE-A, or 5G.

In the radio communication system 1, a radio access scheme based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like, may be used.

A radio access method may also be referred to as a waveform. Note that, in the radio communication system 1, another radio access method (for example, another single carrier transmission method or another multi-carrier transmission method) may be used as a radio access method for the UL or the DL.

In the radio communication system 1, as a downlink channel, a physical downlink shared channel (PDSCH), a physical broadcast channel (PBCH), a physical downlink control channel (PDCCH), or the like, shared by the user terminals 20 may be used.

Further, in the radio communication system 1, as an uplink channel, a physical uplink shared channel (PUSCH), a physical uplink control channel (PUCCH), a physical random access channel (PRACH), or the like, shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted by the PDCCH. The lower layer control information may include, for example, Downlink Control Information (DCI) including scheduling information of at least one of the PDSCH or the PUSCH.

Note that DCI that schedules a PDSCH may also be referred to as DL assignment, DL DCI, or the like, and DCI that schedules a PUSCH may also be referred to as a UL grant, UL DCI, or the like. Note that a PDSCH may be replaced with DL data, and a PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor a CORESET associated with a certain Search Space on the basis of a Search Space configuration.

One search space may correspond to a PDCCH candidate corresponding to one or more aggregation levels. One or more search spaces may be referred to as a search space set. Note that "Search Space", "Search Space set", "Search Space configuration", "Search Space set configuration", "CORESET", "CORESET configuration", and the like in the present disclosure may be replaced with one another.

Uplink Control Information (UCI) including at least one of Channel State Information (CSI), delivery acknowledgement information (which may be referred to as, for example, a hybrid automatic repeat request acknowledgement (HARQ-ACK), ACK/NACK, or the like), or a Scheduling Request (SR) may be transmitted by the PUCCH. A random access preamble for establishing connection with a cell may be transmitted on the PRACH.

Note that, in the present disclosure, downlink, uplink, or the like may be expressed without "link". Furthermore, various channels may be expressed without adding "Physical" to the beginning thereof.

In the radio communication system 1, a synchronization signal (SS), a downlink reference signal (DL-RS), and the like, may be transmitted. In the radio communication system 1, a Cell-Specific Reference Signal (CRS), a Channel State Information Reference Signal (CSI-RS), a DeModulation Reference Signal (DMRS), a Positioning Reference Signal (PRS), a Phase Tracking Reference Signal (PTRS), or the like, may be transmitted as the DL-RS.

The synchronization signal may be, for example, at least one of a Primary Synchronization Signal (PSS) and a Secondary Synchronization Signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

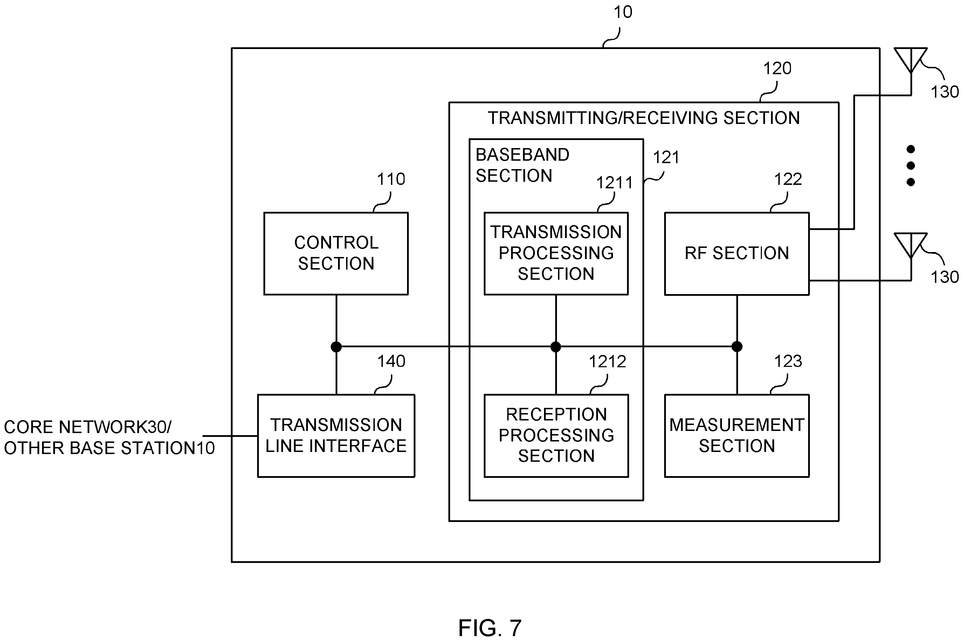

Fig. 7 is a diagram illustrating an example of a configuration of a base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that, although this example mainly describes a functional block which is a characteristic part of the present embodiment, the base station 10 may be assumed also to have another functional block that is necessary for radio communication. Part of processing of each unit described below may be omitted.

The control section 110 controls an entire base station 10. The control section 110 can include a controller, a control circuit, or the like, which is described on the basis of common recognition in a technical field according to the present disclosure.

The control section 110 may control signal generation, scheduling (for example, resource allocation or mapping), or the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of a state of the base station 10, management of a radio resource, or the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, or the like, which is described on the basis of common recognition in a technical field according to the present disclosure.

The transmitting/receiving section 120 may be constituted as an integrated transmitting/receiving section, or may be constituted by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, for example, an array antenna, or the like, which is described on the basis of common recognition in a technical field according to the present disclosure.

The transmitting/receiving section 120 may transmit the above-described downlink channel, synchronization signal, Downlink Reference Signal, or the like. The transmitting/receiving section 120 may receive the above-described uplink channel, Uplink Reference Signal, or the like.

The transmitting/receiving section 120 may form at least either a transmission beam or a reception beam by using digital beam forming (for example, precoding), analog beam forming (for example, phase rotation), or the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, on, for example, data, control information, and the like, acquired from the control section 110, to generate a bit string to be transmitted.

The transmitting/receiving section 120 (transmission processing section 1211) may perform transmission processing such as channel encoding (which may include error correcting encoding), modulation, mapping, filtering processing, Discrete Fourier Transform (DFT) processing (if necessary), Inverse Fast Fourier Transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, or the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, or the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data, and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be outputted to the control section 110.

The transmission line interface 140 may transmit/receive a signal (backhaul signaling) to and from an apparatus included in the core network 30, another base stations 10, or the like, and may acquire, transmit, or the like user data (user plane data), control plane data, or the like for the user terminal 20.

Note that a transmitting section and a receiving section of the base station 10 in the present disclosure may include at least one of the transmitting/receiving section 120, the transmitting/receiving antenna 130, or the transmission line interface 140.

Note that when the terminal detects a beam failure, the transmitting/receiving section 120 may receive a random access preamble in a certain cell.

### (User Terminal)

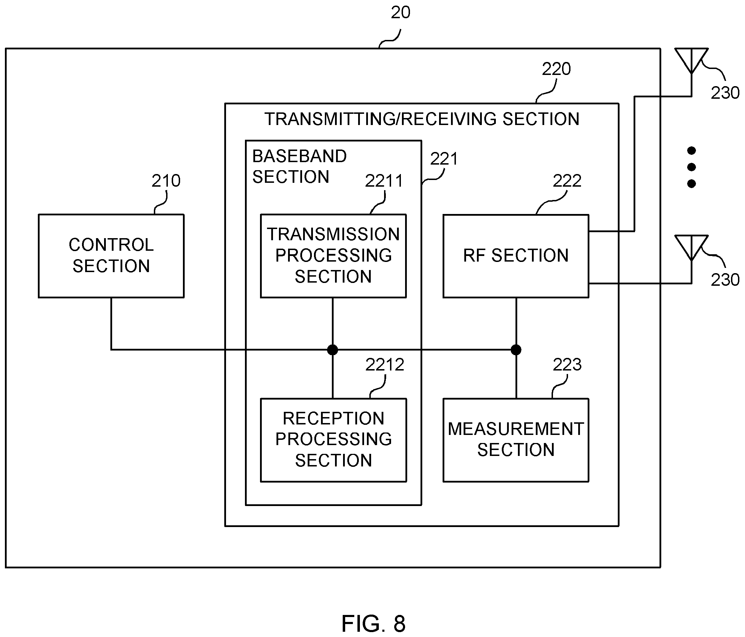

Fig. 8 is a diagram illustrating an example of a configuration of the user terminal according to one embodiment. The user terminal 20 includes a control section 210, a transmitting/receiving section 220, and a transmitting/receiving antenna 230. Note that, one or more each of the control sections 210, the transmitting/receiving sections 220, and the transmitting/receiving antennas 230 may be included.

Note that, although this example mainly describes functional blocks of a characteristic part of the present embodiment, it may be assumed that the user terminal 20 includes other functional blocks that are necessary for radio communication as well. Part of processing of each unit described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may transfer the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined on the basis of configuration of transform precoding. When the transform precoding is enabled for a channel (for example, PUSCH), the transmitting/receiving section 220 (transmission processing section 2211) may perform DFT processing as the transmission processing to transmit the channel by using a DFT-s-OFDM waveform, and when not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 and the transmitting/receiving antenna 230.

Note that when a beam failure is detected, the transmitting/receiving section 220 may transmit a random access preamble in a certain cell.

The control section 210 may controls beam update, when a medium access control control element (MAC CE) for beam failure recovery is transmitted in message 3 or message A of a contention type random access procedure corresponding to the random access preamble, after a specific period from a last symbol of first physical downlink control channel reception including a downlink control information format that has a same HARQ-ACK process number as hybrid automatic repeat request acknowledgement (HARQ-ACK) for physical uplink shared channel transmission including the MAC CE for beam failure recovery, has a toggled new data indicator (NDI) field value, and schedules transmission of a physical uplink shared channel.

The first physical downlink control channel may be a first physical downlink control channel received after physical downlink control channel reception detecting a downlink control information format that has cyclic redundancy check (CRC) scrambled by a cell-radio network temporary identifier (C-RNTI). The downlink control information format may be a DCI format that has cyclic redundancy check (CRC) scrambled by a cell-radio network temporary identifier (C-RNTI). The beam may be at least one of a transmission beam of a physical uplink control channel and a reception beam of a physical downlink control channel.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

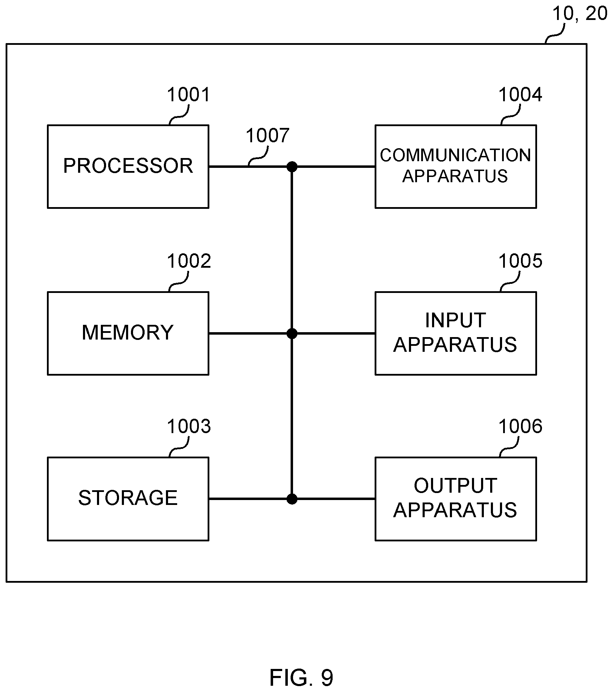

For example, the base station, the user terminal, and the like according to one embodiment of the present disclosure may function as a computer that executes the processing of the radio communication method of the present disclosure. Fig. 9 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, and a unit can be replaced with one another. The hardware configuration of the base station 10 and the user terminal 20 may be configured to include one or a plurality of apparatuses illustrated in the figures, or may be configured without including some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each of functions of the base station 10 and the user terminal 20 is implemented by causing predetermined software (program) to be read on hardware such as the processor 1001 and the memory 1002, thereby causing the processor 1001 to perform operation, control communication via the communication apparatus 1004, and control at least one of reading and writing of data in the memory 1002 and the storage 1003.

For example, the processor 1001 may control the whole computer by running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads a program (program code), a software module, and data from at least one of the storage 1003 and the communication apparatus 1004, into the memory 1002, and executes various pieces of processing in accordance therewith. As the program, a program that causes a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 can store a program (program code), a software module, and the like, which can be executed for implementing the radio communication method according to one embodiment of the present disclosure.

The storage 1003 is a computer-readable recording medium, and may include, for example, at least one of a flexible disk, a floppy (registered trademark) disk, a magneto-optical disk (e.g., compact disc ROM (CD-ROM), digital versatile disc, Blu-ray (registered trademark) disk), a removable disk, a hard disk drive, a smart card, a flash memory device (e.g., card, stick, and key drive), a magnetic stripe, a database, a server, and other appropriate storage media. The storage 1003 may be referred to as an auxiliary storage apparatus.

The communication apparatus 1004 is hardware (transmission/reception device) for inter-computer communication via at least one of a wired network and a wireless network, and is also referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by physically or logically separated transmitting section 120a (220a) and receiving section 120b (220b).

The input apparatus 1005 is an input device for receiving input from the outside (e.g., keyboard, mouse, microphone, switch, button, and sensor). The output apparatus 1006 is an output device that performs output to the outside (for example, a display, a speaker, a light emitting diode (LED) lamp, or the like). Note that the input apparatus 1005 and the output apparatus 1006 may be provided in an integrated configuration (e.g., touch panel).

Apparatuses such as the processor 1001 and the memory 1002 are connected by the bus 1007 for communicating information. The bus 1007 may include a single bus, or may include buses that differs between apparatuses.

The base station 10 and the user terminal 20 may include hardware such as a microprocessor, a digital signal processor (DSP), an application specific integrated circuit (ASIC), a programmable logic device (PLD), and a field programmable gate array (FPGA), and a part or all of the functional blocks may be implemented by the hardware. For example, the processor 1001 may be implemented by using at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced with one another. Further, the signal may be a message. The reference signal can be abbreviated as an RS, and may be referred to as a pilot, a pilot signal, and the like, depending on which standard applies. A component carrier (CC) may be referred to as a cell, a frequency carrier, a carrier frequency, and the like.

A radio frame may include one or a plurality of durations (frames) in a time domain. Each of the one or more periods (frames) included in the radio frame may be referred to as a subframe. Further, the subframe may include one or more slots in the time domain. The subframe may have a fixed time length (e.g., 1 ms) that does not depend on numerology.

Here, the numerology may be a communication parameter applied to at least one of transmission and reception of a signal or a channel. The numerology may indicate at least one of, for example, subcarrier spacing (SCS), a bandwidth, a symbol length, a cyclic prefix length, a transmission time interval (TTI), the number of symbols per TTI, radio frame configuration, specific filtering processing performed by a transceiver in a frequency domain, and specific windowing processing performed by the transceiver in a time domain.

The slot may include one or a plurality of symbols (orthogonal frequency division multiplexing (OFDM) symbol, single carrier frequency division multiple access (SC-FDMA) symbol, and the like) in the time domain. The slot may be a time unit based on the numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted by using a mini slot may be referred to as a PDSCH (PUSCH) mapping type B.

A radio frame, a subframe, a slot, a mini slot, and a symbol all represent a time unit at the time of transmitting a signal. The radio frame, the subframe, the slot, the mini slot, and the symbol may be called by other applicable names, respectively. Note that time units such as a frame, a subframe, a slot, a mini slot, and a symbol in the present disclosure may be replaced with one another.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to not as a subframe but as a slot, a mini slot, and the like.

Here, the TTI refers to a minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of the TTI is not limited thereto.

The TTI may be a transmission time unit of channel-encoded data packets (transport blocks), code blocks, codewords, and the like, or may be a processing unit in scheduling, link adaptation, and the like. Note that, when a TTI is given, a time section (e.g., number of symbols) in which a transport block, a code block, a codeword, and the like are actually mapped may be shorter than the TTI.

Note that, when one slot or one mini slot is referred to as a TTI, one or more TTIs (i.e., one or more slots or one or more mini slots) may be the minimum time unit of scheduling. The number of slots (number of mini slots) constituting the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a subslot, a slot, and the like.

Note that a long TTI (e.g., usual TTI and subframe) may be replaced with a TTI having a time length exceeding 1 ms, and a short TTI (e.g., shortened TTI) may be replaced with a TTI having a TTI length less than the TTI length of a long TTI and equal to or more than 1 ms.

A resource block (RB) is a unit of resource allocation in a time domain and a frequency domain, and may include one or a plurality of consecutive subcarriers in the frequency domain. The number of subcarriers included in the RB may be the same regardless of the numerology, and may be twelve, for example. The number of subcarriers in the RB may be determined based on the numerology.

The RB may include one or a plurality of symbols in the time domain, and may have a length of one slot, one mini slot, one subframe, or one TTI. Each of one TTI, one subframe, and the like may include one or a plurality of resource blocks.

Note that one or a plurality of RBs may be referred to as a physical resource block (PRB), a sub-carrier group (SCG), a resource element group (REG), a PRB pair, an RB pair, and the like.

The resource block may include one or a plurality of resource elements (REs). For example, one RE may be a radio resource domain of one subcarrier and one symbol.

A bandwidth part (BWP) (which may be referred to as partial bandwidth and the like) may represent a subset of consecutive common resource blocks (RBs) for a numerology in a carrier. Here, the common RB may be specified by the index of the RB based on a common reference point of the carrier. The PRB may be defined in a BWP, and be numbered in the BWP.

The BWP may include a BWP for UL (UL BWP) and a BWP for DL (DL BWP). For the UE, one or a plurality of BWPs may be configured in one carrier.

At least one of the configured BWPs may be active, and it need not be assumed that the UE transmits/receives a predetermined signal/channel outside the active BWP. Note that "cell", "carrier", etc. in the present disclosure may be replaced with "BWP".

Note that the structures of the above-described radio frame, subframe, slot, mini slot, symbol, and the like are merely examples. For example, configurations such as the number of subframes in a radio frame, the number of slots per subframe or radio frame, the number of mini slots in a slot, the number of symbols and RBs in a slot or a mini slot, the number of subcarriers in an RB, the number of symbols in a TTI, a symbol length, a cyclic prefix (CP) length, and the like can be variously changed.

The information, parameters, and the like described in the present disclosure may be represented by using an absolute value, a relative value from a predetermined value, or other corresponding information. For example, radio resources may be instructed by a predetermined index.

The names used for parameters and the like in the present disclosure are in no respect limitations. Further, any mathematical expression or the like that uses these parameters may differ from those explicitly disclosed in the present disclosure. Since various channels (e.g., PUCCH and PDCCH) and information elements can be identified by any suitable name, various names allocated to these various channels and information elements are in no respect limitations.

The information, signals, and the like described in the present disclosure may be represented by using any of a variety of different pieces of technology. For example, data, instructions, commands, information, signals, bits, symbols, and chips, which may be referenced throughout the above description, may be represented by voltages, currents, electromagnetic waves, magnetic fields or particles, optical fields or photons, or any combination thereof.

The information, signals, and the like can be output in at least one of a direction from a higher layer to a lower layer and a direction from a lower layer to a higher layer. The information, signals, and the like may be input/output via a plurality of network nodes.

The input/output information, signals, and the like may be stored in a specific location (e.g., in memory), or may be managed by using a management table. The information, signals, and the like to be input and output can be overwritten, updated, or appended. The output information, signals, and the like may be deleted. The input information, signals, and the like may be transmitted to another apparatus.

Information may be announced not only in the aspect/embodiments described in the present disclosure but in another method. For example, information may be announced in the present disclosure by physical layer signaling (e.g., downlink control information (DCI), uplink control information (UCI)), higher layer signaling (e.g., radio resource control (RRC) signaling, broadcast information (master information block (MIB), system information block (SIB), and the like), medium access control (MAC) signaling), another signal, or a combination thereof.

Note that the physical layer signaling may be referred to as layer 1/layer 2 (L1/L2) control information (L1/L2 control signal), L1 control information (L1 control signal), and the like. Further, the RRC signaling may be referred to as an RRC message, and may be, for example, an RRC Connection Setup message, an RRC Connection Reconfiguration message, and so on. The MAC signaling may be announced by using, for example, a MAC control element (CE).

Predetermined information may be announced (e.g., "being X" may be announced) not only explicitly but implicitly (e.g., by not reporting the predetermined information, or by reporting another piece of information).

Decisions may be made in a value represented by one bit (0 or 1), in a Boolean value represented by true or false, or in comparison of numerical values (e.g., comparison against predetermined value).

Regardless of being referred to as software, firmware, middleware, a microcode, or a hardware description language, or by other names, software should be interpreted broadly so as to mean instructions, instruction sets, codes, code segments, program codes, programs, subprograms, software modules, applications, software applications, software packages, routines, subroutines, objects, executable files, execution threads, procedures, functions, and the like.

The software, instructions, information, and the like may be transmitted/received via a transmission medium. For example, when software is transmitted from a website, a server, or another remote source by using at least one of wired technology (e.g., coaxial cable, optical fiber cable, twisted pair, and digital subscriber line (DSL)) and wireless technology (e.g., infrared rays and microwaves), at least one of the wired technology and the wireless technology is included in the definition of the transmission medium.

The terms "system" and "network" used in the present disclosure can be interchangeably used. The "network" may mean an apparatus (e.g., base station) included in a network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be interchangeably used. The base station may be referred to by a term such as a macro cell, a small cell, a femto cell, and a pico cell.

The base station can accommodate one or a plurality of (e.g., three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station and a base station subsystem that perform communication service in the coverage.

In the present disclosure, the terms such as "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or by other appropriate terms.

At least one of the base station and the mobile station may be referred to as a transmission apparatus, a reception apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station and the mobile station may be an Internet of Things (IoT) device such as a sensor.

The base station in the present disclosure may be replaced with a user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with a base station. In the case, the base station 10 may have the function of the above-mentioned user terminal 20.

In the present disclosure, the operation performed by the base station may be performed by an upper node thereof in some cases. In a network including one or a plurality of network nodes with a base station, it is clear that various operations performed for communication with a terminal can be performed by a base station, one or more network nodes (e.g., mobility management entity (MME) and serving-gateway (S-GW) are possible, but are not limitations) other than the base station, or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, for the method described in the present disclosure, various step elements are presented by using an illustrative order, and the method is not limited to the presented specific order.

Each aspect/embodiment described in the present disclosure may be applied to a system using Long-Term Evolution (LTE), LTE-Advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of the foregoing, and the like. Further, a plurality of systems may be combined (for example, a combination of LTE or LTE-A and 5G, and the like) and applied.

The phrase "based on" used in the present disclosure does not mean "based on only", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. Reference to the first and second elements does not imply that only two elements may be adopted, or that the first element must precede the second element in some way.

The term "determining" used in the present disclosure may include a wide variety of operations. For example, "determining" may be regarded as "determining" judging, calculating, computing, processing, deriving, investigating, looking up, search, inquiry (e.g., looking up in table, database, or another data structure), ascertaining, and the like.

"Determining" may be regarded as determining receiving (e.g., receiving information), transmitting (e.g., transmitting information), inputting, outputting, accessing (e.g., accessing data in memory), and the like.

"Determining" may be regarded as determining resolving, selecting, choosing, establishing, comparing, and the like. That is, "determining" may be regarded as "determining" some operations.

"Determining" may be replaced with "assuming", "expecting", "considering", and the like.

The terms "connected" and "coupled" used in the present disclosure, or all variations thereof mean all direct or indirect connections or coupling between two or more elements, and can include the presence of one or more intermediate elements between two elements "connected" or "coupled" with each other. The coupling or connection between the elements may be physical, logical, or a combination of these. For example, "connection" may be replaced with "access".

In the present disclosure, when two elements are connected, the two elements can be considered to be "connected" or "coupled" with each other by using one or more electrical wires, cables, printed electrical connections, and the like, and using, as some non-limiting and non-inclusive examples, electromagnetic energy and the like having a wavelength in a radio frequency domain, a microwave domain, and an optical (both visible and invisible) domain.

In the present disclosure, the phrase "A and B are different" may mean "A and B are different from each other". Note that the phrase may mean that "A and B are different from C". The terms such as "leave", "coupled", and the like may be interpreted similarly to "different".

In the present disclosure, when "include", "including", and variations thereof are used, these terms are intended to be inclusive similarly to the term "comprising". The term "or" used in the present disclosure is intended not to be an exclusive-OR.

In the present disclosure, when articles in English such as "a", "an", and "the" are added in translation, the present disclosure may include the plural forms of nouns that follow these articles.

Although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a transmitting section that transmits a random access preamble in a certain cell when a beam failure is detected; and
a control section that controls beam update, when a medium access control control element (MAC CE) for beam failure recovery is transmitted in message 3 or message A of a contention type random access procedure corresponding to the random access preamble, after a specific period from a last symbol of first physical downlink control channel reception including a downlink control information format that has a same HARQ-ACK process number as hybrid automatic repeat request acknowledgement (HARQ-ACK) for physical uplink shared channel transmission including the MAC CE for beam failure recovery, has a toggled new data indicator (NDI) field value, and schedules transmission of a physical uplink shared channel.

2. The terminal according to claim 1, wherein
the first physical downlink control channel is a first physical downlink control channel received after physical downlink control channel reception detecting a downlink control information format that has cyclic redundancy check (CRC) scrambled by a cell-radio network temporary identifier (C-RNTI).

3. The terminal according to claim 1, wherein
the downlink control information format is a DCI format that has cyclic redundancy check (CRC) scrambled by a cell-radio network temporary identifier (C-RNTI).

4. The terminal according to any one of claims 1 to 3, wherein the beam is at least one of a transmission beam of a physical uplink control channel and a reception beam of a physical downlink control channel.

5. A radio communication method for a terminal, comprising the steps of:
transmitting a random access preamble in a certain cell when a beam failure is detected; and
controlling beam update, when a medium access control control element (MAC CE) for beam failure recovery is transmitted in message 3 or message A of a contention type random access procedure corresponding to the random access preamble, after a specific period from a last symbol of first physical downlink control channel reception including a downlink control information format that has a same HARQ-ACK process number as hybrid automatic repeat request acknowledgement (HARQ-ACK) for physical uplink shared channel transmission including the MAC CE for beam failure recovery, has a toggled new data indicator (NDI) field value, and schedules transmission of a physical uplink shared channel.

6. A base station comprising:
a receiving section that receives a random access preamble in a certain cell when a terminal detects a beam failure, wherein in the terminal, the base station controls beam update, when a medium access control control element (MAC CE) for beam failure recovery is transmitted in message 3 or message A of a contention type random access procedure corresponding to the random access preamble, after a specific period from a last symbol of first physical downlink control channel reception including a downlink control information format that has a same HARQ-ACK process number as hybrid automatic repeat request acknowledgement (HARQ-ACK) for physical uplink shared channel transmission including the MAC CE for beam failure recovery, has a toggled new data indicator (NDI) field value, and schedules transmission of a physical uplink shared channel.
